# EUROPEAN PATENT APPLICATION

(11) **EP 3 474 208 A1**
(43) Date of publication of application: **24.04.2019**
(21) Application number: 17197788.7
(22) Date of filing: 23.10.2017
(51) Int. Cl.: G06Q 20/02, G06Q 20/20

(54) **SYSTEM AND METHOD FOR PERFORMING TRANSACTIONS**

(71) Applicant: Mastercard International Incorporated, Purchase NY 10577 (US)
(72) Inventor: SINHA, Advait, London, W9 1TH (GB); COTTER, Glynn, Little Harrowden, NN9 5AR (GB); AHMAD, Syed Aamir, London, NW1 6EN (GB)
(74) Representative: Lawrence, Richard Anthony

(57) **Abstract**

A method for performing a transaction via a banking infrastructure, between a consumer using a transaction device associated with an issuing bank and a merchant using a merchant terminal configured to communicate with an acquiring bank, is provided. The method comprises an authorisation step wherein authorisation is obtained from the consumer's bank; a first settlement step wherein funds for the transaction are received by the banking infrastructure from the consumer's bank; an approval step wherein the banking infrastructure receives approval from the issuing bank and/or the acquiring bank for release of the funds; and a second settlement step wherein the banking infrastructure transfers the funds to the acquiring bank. A terminal and a method for a terminal to authorise a transaction are also provided.

## Description

### Field of Disclosure

The present invention relates to methods and apparatus for performing financial transactions between parties. Embodiments of the present invention are particularly appropriate for use where fulfilment of an order or payment for goods or services is uncertain.

### Background of Disclosure

EMV is a financial transaction system based around the use of payment devices such as contact and contactless transaction cards. In the EMV payment model, an issuing bank provides an account holding customer with a smart card (or other token) to use when making payments. An acquiring bank provides a merchant with a compatible terminal device to use when accepting payments.

Customers may use their payment device to purchase goods or services from a merchant. Conventionally, the goods or services are provided to the customer at the time of purchase, such that the transaction can be authorised at the time of purchase, followed by automatic clearing and settlement of the transaction. However, when the goods or services are not provided to the customer at the time of purchase, a customer may not be certain that the order will be satisfactorily fulfilled until after the funds have been transferred to the merchant.

Escrow services exist for transactions involving substantial amounts of money where there is a trust gap between parties. Both parties to a transaction register with an independent third party (the escrow service provider), who holds the funds on behalf of the transacting parties until both parties confirm that the terms of the purchase have been respected. Such services are costly and cumbersome, creating a barrier to commerce.

### Summary of Disclosure

In a first aspect, the disclosure provides a method for performing a transaction via a banking infrastructure, between a consumer using a transaction device associated with an issuing bank and a merchant using a merchant terminal configured to communicate with an acquiring bank. The method comprises: an authorisation step wherein authorisation is obtained from the consumer's bank; a first settlement step wherein funds for the transaction are received by the banking infrastructure from the consumer's bank; an approval step wherein the banking infrastructure receives approval from the issuing bank and/or the acquiring bank for release of the funds; and a second settlement step wherein the banking infrastructure transfers the funds to the acquiring bank.

In some embodiments, the authorisation step comprises receiving signed transaction details from the issuing bank, wherein the signed transaction details comprise an identifier that identifies the transaction as a two steps settlement transaction.

In embodiments, the second settlement step comprising transferring the funds back to the issuing bank if approval has not been received within a specified period of time.

In embodiments, the authorisation step comprises receiving signed transaction details from the acquiring bank, and extracting from the signed transaction detail one or more data fields comprising the approval conditions of the transaction.

Optionally, the one or more data fields comprising approval conditions may comprise information regarding whether approval from the issuing bank and/or acquiring bank is/are necessary for release of the funds.

In embodiments, the method further comprises checking that the approval conditions have been fulfilled before performing the second settlement step.

In convenient embodiments, the authorisation is performed as an online transaction authorisation process according to EMV standards.

In a second aspect, the disclosure provides a terminal having a processor, a memory, means to make a connection with a transaction device, means to communicate with an acquiring bank, and a user interface. The terminal is programmed to: request confirmation from a user, via the user interface, that a two steps settlement transaction according to the method of any embodiments the first aspect is to be performed; compute an escrow identifier, wherein the escrow identifier identifies the transaction as a two steps settlement transaction according to the method of any embodiments of the first aspect; send transaction details comprising the escrow identifier to the transaction device; receive a signature of the transaction details from the transaction device; send the signed transaction details to the acquiring bank; and receive an authorisation message from the acquiring bank.

In embodiments, the terminal being programmed to request confirmation from a user comprises the terminal being programmed to obtain an indication of the approval conditions of the transaction.

Optionally, the terminal being programmed to obtain an indication of the approval conditions of the transaction may comprise the terminal being programme to request the user to indicate whether approval from the consumer and/or the merchant are required for the two steps settlement transaction to proceed to completion.

In some embodiments, the terminal being programmed to send the signed transaction details to the acquiring bank comprises the terminal identifying the transaction as a two steps settlement transaction by including the escrow identifier in the signed transaction details.

In embodiments, the terminal being programmed to compute an escrow identifier comprises the terminal being programmed to compute an escrow identifier that identifies the transaction as a two steps settlement transaction according to the method of any embodiment of the first aspect, and that identifies the approval conditions of the transaction.

In a third aspect, the disclosure provides a method for a terminal to authorise a transaction between a consumer using a transaction device associated with an issuing bank and a merchant. The method comprises requesting confirmation from a user that a transaction according to the method of any embodiment of the first aspect is to be performed; computing an escrow identifier, wherein the escrow identifier identifies the transaction as a transaction according to the method of the first aspect; sending transaction details comprising the escrow identifier to the transaction device and obtaining a signature of the transaction details from the transaction device; sending the signed transaction details to an acquiring bank associated with the terminal. In embodiments, the user may be the consumer or the merchant.

In some embodiments, requesting confirmation from a user comprises obtaining confirmation of the approval conditions of the transaction. In embodiments, the approval conditions of the transaction comprise whether approval from the consumer and/or the merchant are required.

In convenient embodiments, the wherein the presence of the transaction identifier identifies the transaction as a transaction according to the method of the first aspect.

Optionally, the transaction identifier additionally comprises the approval conditions of the transaction.

### Brief Description of Figures

Embodiments of the disclosure will now be described, by way of example, with reference to the accompanying Figures, of which:
Figure 1 shows elements of a payment infrastructure in which embodiments of the invention may be used;
Figure 2 shows in schematic form a transaction card adapted for use in embodiments of the invention;
Figure 3 shows in schematic form a terminal adapted for use in embodiments of the invention;
Figure 4 shows in flow diagram form a method of initiating and authorising a transaction according to a general embodiment of the invention;
Figure 5 shows in flow diagram form a method of clearing and settling a transaction according to an embodiment of the invention;
Figure 6 shows in flow diagram form a method of clearing and settling a transaction according to an embodiment of the invention.

### Description of Specific Embodiments

Specific embodiments of the invention will be described below with reference to the Figures. The embodiments described below relate to a payment card used as a transaction device for payments with POI (point of interaction) terminals (such as a POS - point of sale - terminal) under the EMV protocols indicated above. In embodiments, other transaction devices and terminals may be used, in other transaction systems and contexts. For example, other types of payment devices may be used, such as mobile devices or any device capable of establishing an interaction with a terminal in order to complete a transaction.

As used herein, the term "terminal" refers to any merchant device that interacts with a customer transaction device in order to perform a transaction. The terminal may interact directly (i.e. establishing a communication) with the transaction device such as via the consumer inserting, swiping or tapping a payment card on a POS terminal, or by communicating with a mobile device. In embodiments, the terminal may provide an interface (such as a web interface) for a consumer to provide information associated with the transaction device.

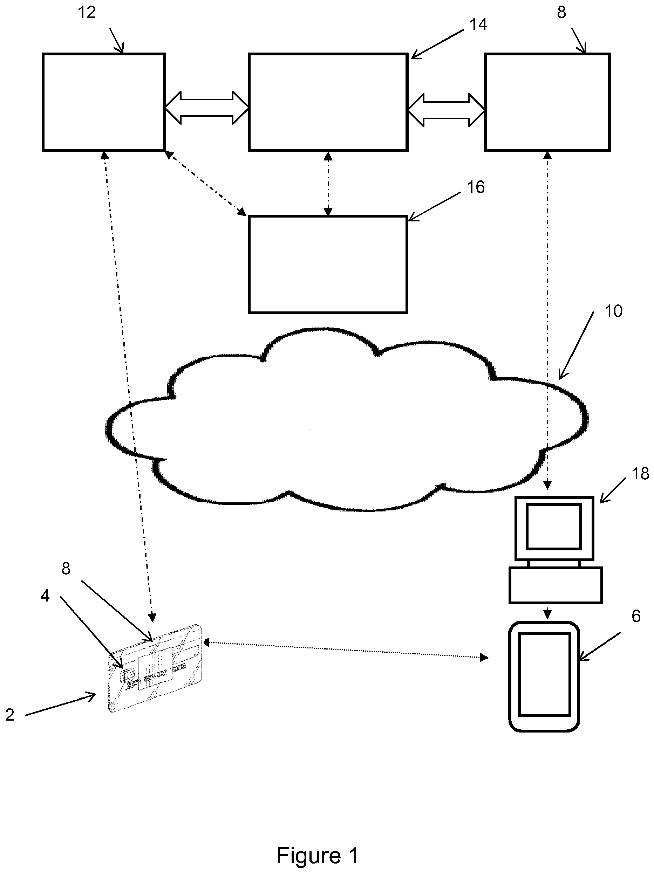

Figure 1 shows schematically relevant elements of a payment infrastructure in which embodiments of the invention may be used.

A consumer (not shown) is provided with a payment device in the form of a payment card 2 (as discussed above, in other embodiments other transaction devices may be used). The payment card 2 comprises a chip 4 with a processor and a memory. The chip 4 is here able to contact a terminal 6 to enable contact card protocols such as those defined under ISO/IEC 7816 to be followed. This payment card 2 may also have a magnetic stripe 8 to allow a transaction to be carried out using magnetic stripe protocols. The payment card 2 may also comprise an antenna and associated hardware and software to enable communication with a terminal by NFC and associated contactless card protocols such as those defined under ISO/IEC 14443.

The payment card 2 (or other transaction device or transaction device functionalities such as e.g. an e-wallet application, etc.) are provided to the consumer by a card issuer 12 (also referred to as "card issuer").

Other computer equipment in the infrastructure may be fixed or mobile, such as point of interaction (POI) terminals 6, of which the example shown is a point-of-sale (POS) terminal used by a merchant interacting with the user. The POS terminal 6 interacts with the payment card 2 through a card reader (not shown discretely from POS terminal 6). The merchant POS terminal 6 is connectable to an acquiring bank 8, either directly or via a merchant terminal 18, preferably in a secure way via a network 10 (either through a dedicated channel or through a secure communication mechanism over a public or insecure channel).

A banking infrastructure 14 connects the issuing bank (card issuer) 12 and the acquiring bank 8, allowing transactions to be carried out between them. This banking infrastructure will typically be provided by a transaction card provider who provides transaction card services to the card issuing bank 12. The banking infrastructure 14 provides authorisation at the time of purchase, clearing of the transaction and reconciliation typically within the same working day, and settlement of payments shortly after that. The banking infrastructure 14 comprises a plurality of switches, servers and databases, and is not described further here as the details of the banking infrastructure used are not necessary for understanding how embodiments of the invention function and may be implemented .

An escrow manager 16 communicates with the banking infrastructure 14 and with the issuing bank 12. The escrow manager 16 holds funds in escrow between the initiation of a transaction and the final settlement of the transaction (see further below). In embodiments, the escrow manager 16 records details associated with a transaction, such as the date on which the transaction was initiated, the amount of the transaction, information that allows the banking infrastructure to identify the parties, issuing bank and acquiring bank, whether approval to release the funds is necessary from one or both parties, whether approval has been obtained from one or both parties. In embodiments, the functions of the escrow manager 16 may be provided by the banking infrastructure 14. In other embodiments, the escrow manager infrastructure 16 may be separate from the banking infrastructure14 and may comprise a plurality of switches, servers and databases. The escrow manager infrastructure 16 is not described further here as the details of the escrow manager infrastructure used are not necessary for understanding how embodiments of the invention function and may be implemented.

As used herein, the term "escrow transaction" refers to a financial transaction through a transaction infrastructure, wherein the funds are held by an escrow manager until the escrow manager receives confirmation, through the transaction infrastructure, that the funds can be released.

In embodiments, the invention may work as part of conventional transaction infrastructure as described above.

A merchant terminal 18 communicates with the merchant POS terminal 6 and the bank 8. In some embodiments, the merchant terminal 18 functionalities may be included in the POS terminal 6 functionalities - for example, there may be a single terminal with scripts used in embodiments of the invention implemented as an application on the terminal 6. In convenient embodiments, the merchant POS terminal 6 may be a mobile point of sale terminal (MPOS). For simplicity, references to the terminal 6 below refer to embodiments where the POS terminal 6 includes the functionalities of the merchant terminal 18. In embodiments where the POS terminal 6 does not include all the functionalities of the merchant terminal 18, it would be clear to the skilled person from the context and nature of the specific steps below which terminal 6 or 18 is involved in each specific step.

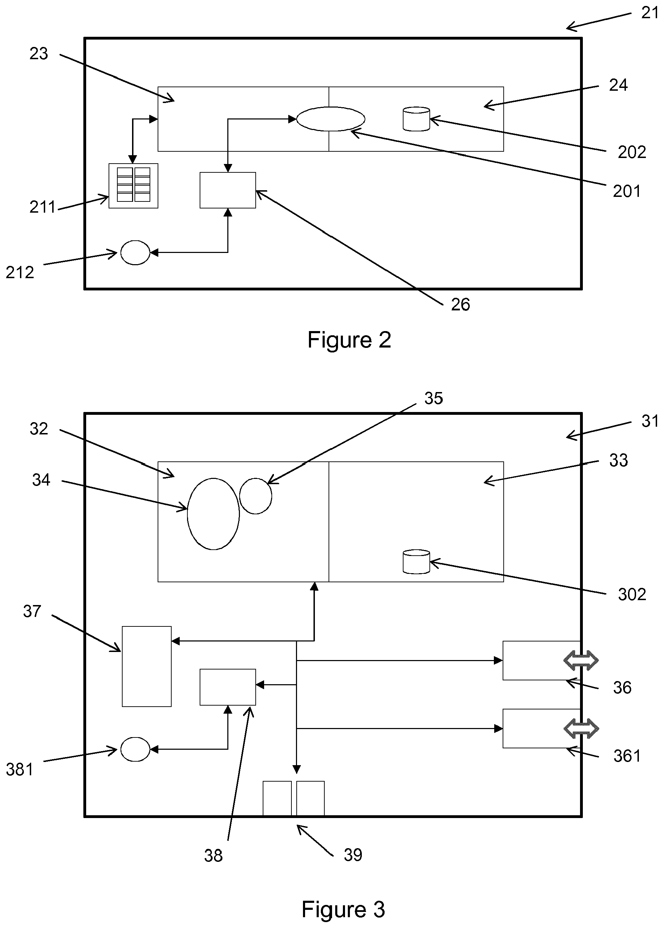

Figure 2 shows schematically relevant parts of a representative hardware and software architecture for a transaction card such as a payment card 21 (particularly an EMV payment card) suitable for implementing an embodiment of the invention. The payment card 21 comprises an application processor 23, one or more memories 24 associated with the application processor and a NFC controller 26. The payment card 21 is equipped with a contact pad 211 for contact transactions using contact card protocols such as ISO/IEC 7816 and also comprises an antenna 212 connected to NFC controller 26 to allow transactions under contactless card protocols such as those defined under ISO/IEC 14443.

In the arrangement shown, the application processor 23 and associated memories 24 comprise (shown within the processor space, but with code and data stored within the memories) a transaction application 201. The memories 24 may contain a storage location 202 for data associated with programmes held by the card. The application processor 23 provides an NFC application 207 which interfaces with the NFC controller 26. A transaction may be performed over a contact card interface, a contactless card interface, or any other communication channel available to the card for communicating with a terminal (either general purpose or dedicated to the purpose).

In embodiments, the transaction application 201 may hold scripts that are necessary for performing a conventional EMV transaction with online authorisation.

Figure 3 illustrates the functional features of a terminal for use in embodiments of the invention in more detail. The terminal 31 has a processor 32 and associated memories 33. The base function of the terminal in the case shown is to operate as a point of interaction (POI) with a financial system - such a terminal may be a point of sale (POS) terminal for example. In the case shown, the terminal 31 has an operating system 34 and transaction software 35 (these may be provided together in a single assemblage of code, or may both be divided into a number of different components, but are represented here as two elements for convenience). The operating system 34 manages hardware resources and provides common services for applications, whereas the transaction software 35 performs the base function of the terminal and may be provided (for example) as one or more applications. The terminal 31 will generally have a protected channel 36 to another party such as an acquiring bank (this may, for example, be performed over a public network by use of encryption).

In embodiments, the transaction software 35 may comprise scripts allowing the terminal 6 to complete a conventional EMV transaction authorisation. In embodiments, the transaction software 35 may additionally comprise scripts allowing the terminal to perform an escrow transaction according to the invention. For example, the terminal may be configured to produce an escrow identifier that is sent by the terminal to the acquiring bank as part of the transaction details sent in a transaction authorisation step, as will be described further below. The terminal may additionally be configured to request confirmation from a user that an escrow transaction is to be performed, and optionally request confirmation of the approval conditions of such a transaction (as explained further elsewhere in this document).

The terminal 31 will also have means to make a connection to a device such as a transaction card. In this case, the terminal has a contact card reader 37 and an NFC controller 38 and antenna 381 to allow a contactless card connection to a contactless card, or a device such as an NFC-enabled mobile telephone able to act as a proxy for a contactless card. The terminal 31 may have additional ports 39 to allow data to be provided to it from other sources (for example, by USB stick). The memories 33 contain a storage location 302 for a set of scripts to be transmitted to a payment card, and for transaction data that is sent periodically to a banking infrastructure 14. Transactions may be established through the contact card reader 37 or through the NFC controller 38, or indeed any other appropriate local connection. Data (e.g. transaction data, scripts etc.) may be communicated by/to the terminal via the protected channel 36 or via additional ports 39. In convenient embodiments, the additional ports 39 may include e.g. an SD card reader, which may be used e.g. to collect transaction data that may be periodically communicated to the one or more programme managers. In embodiments, the terminal comprises a user interface 361, through which data may be communicated by / to the terminal. The user interface 361 may be integral to the terminal or may be a separate (fixed or mobile) device that communicates with the terminal. For example, the user interface may comprise a screen, touch screen, keypad, etc.

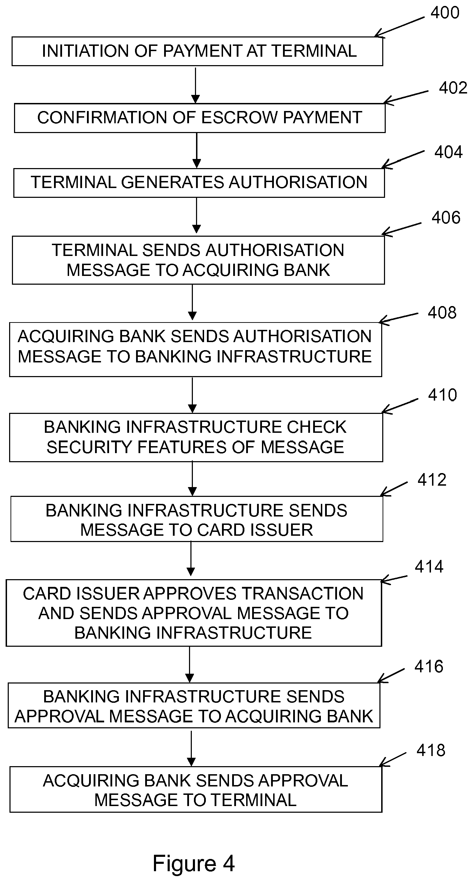

Figure 4 shows in flow diagram form a method of initiating and authorising a transaction according to a general embodiment of the invention.

In a first step 400, a consumer uses a transaction device 2 to initiate a payment at a POS terminal. For example, a consumer may enter card details at an online merchant portal, insert a card into a POS terminal, or otherwise allow a payment device to communicate with a POS terminal. At step 402, a user (for example the consumer or the merchant) confirms, at the terminal 6, that an escrow transaction is to be performed. The confirmation may be implicit or explicit.

In embodiments, the POS terminal 6 may provide multiple options to the user (i.e. customer or merchant), such as that of performing a normal transaction, or that of performing an escrow transaction. A user may then be required to provide an explicit confirmation that an escrow transaction is to be performed. In embodiments, the POS terminal 6 and / or the transaction device 2 may be configured to initiate all transactions as escrow transactions. In such embodiments, the terminal 6 may proceed with the escrow transaction without explicit confirmation from the user. The terminal 6 may optionally inform the user that an escrow transaction will be performed. The user may then provide an implicit confirmation that an escrow transaction is to be performed, for example by entering their personal identification number (PIN), password or any other type of information that may be required according to the cardholder verification method used, in order to allow the transaction to proceed. Alternatively, the terminal 6 may request explicit confirmation that the user wishes to proceed with the escrow transaction, such as by requiring the user to press a key on the terminal to confirm that they wish to proceed.

In embodiments, confirming 402 that an escrow transaction is to be performed comprises requesting confirmation of the approval conditions of the transaction. The approval conditions of the transactions may comprise whether approval from the consumer and/or the merchant is necessary for the transaction to proceed to a complete settlement (see below). For example, the terminal 6 may provide multiple options to the user, comprising any options chosen from the following set: an escrow transaction with approval from the consumer, an escrow transaction with approval from the merchant, an escrow transaction with approval from both the consumer and the merchant, or a normal transaction. In embodiments, default approval conditions may be set. For example, the POS terminal 6 and / or the transaction device 2 may be configured to initiate all transactions as escrow transactions requiring approval from both the merchant and the consumer. In such embodiments, the terminal 6 may proceed with the escrow transaction without explicit confirmation from the user.

In embodiments, the cardholder may be verified by any appropriate Cardholder Verification Method. In preferred embodiments, the cardholder is verified online or offline by entering a personal identification number (PIN). Other methods such as use of biometric data, etc. may also be used instead or in addition with the above.

The transaction then proceeds to the authorisation step. In particular, an authorisation message is generated 404 by the terminal 6, comprising transaction details (e.g. identification of the merchant, purchase amount, identity of the transaction device) and a signature from the transaction device 2. For example, in a conventional EMV transaction process, the transaction device 2 may provide to the terminal 6 a list of data fields (i.e. tags) that it requires from the terminal 6 in order to approve or decline a transaction. The terminal 6 provides this information to the device 2, and requests a cryptogram from the device 2. The cryptogram generated by the transaction device 2 represents a digital signature of the transaction details.

In addition to the data that would be present in a conventional EMV transaction, the transaction details contains a flag that is referred to herein as an "escrow flag", also referred to herein as "escrow identifier". In embodiments, the presence of the escrow flag identifies the transaction as an escrow transaction. In embodiments, the escrow flag may be stored in one or more existing EMV tag. Preferably, the escrow flag is stored in a tag or tags that is/are not used in a conventional transaction. In embodiment, the escrow flag comprises a transaction identifier, for example a number that can be used to identify and track the transaction. In embodiments, a transaction identifier may be generated based on the transaction data that would be present in a conventional transaction. For example, a transaction identifier may be generated using the application cryptogram via a hash function, or other transaction specific elements. Examples of how suitable transaction identifiers may be generated are provided in document GB 2525191 A.

In embodiments, the escrow flag may be generated by the terminal 6. In embodiments, the escrow flag may be provided to the transaction device 2 together with the transaction details.

In embodiments, the escrow flag comprises information allowing at least the banking infrastructure 14 and/or the escrow manager 16 to identify the approval conditions of the transaction. In embodiments, the escrow identifier and the approval conditions may be stored in separate EMV tags. In embodiments, the information allowing the banking infrastructure 14 and/or the escrow manager 16 to identify the approval conditions of the transaction may be stored in the same EMV tag as the escrow identifier, i.e. the escrow identifier may comprise information allowing at least the banking infrastructure 14 and/or the escrow manager 16 to identify the approval conditions of the transaction. In embodiments, the escrow identifier may comprise such information, in addition to a transaction identifier.

In embodiments, a different EMV tag may be used to store the escrow identifier depending on the approval conditions of the transaction. In such embodiments, the presence of an escrow identifier in a tag E1 may be interpreted by the banking infrastructure and/or escrow manager as an indication that the transaction is associated with a first set of approval conditions, the presence of an escrow identifier in a tag E2 may be interpreted by the banking infrastructure and/or escrow manager as an indication that the transaction is associated with a second, different set of approval conditions, etc. For example, a first set of approval conditions may require approval from a single party (such as the cardholder) in order to release the funds, whereas a second set of approval conditions may require the approval of both parties (e.g. the consumer and the merchant) in order to release the funds.

The authorisation message is then sent 406 by the terminal 6 to the acquiring bank 8. The acquiring bank 8 then communicates 408 the signed transaction details to the banking infrastructure 14. The banking infrastructure 14 checks 410 the security features of the message and sends 412 the transaction details to the issuing bank 12. The issuing bank 12 approves the transaction, and sends 414 an approval message to the banking infrastructure 14. The banking infrastructure 14 communicates 416 this message back to the acquiring bank 8, which then communicates 418 it to the terminal 6. This completes the transaction authorisation process. The terminal 6 may then optionally provide a receipt to the consumer and/or merchant. In embodiments, the receipt may comprise a transaction identifier.

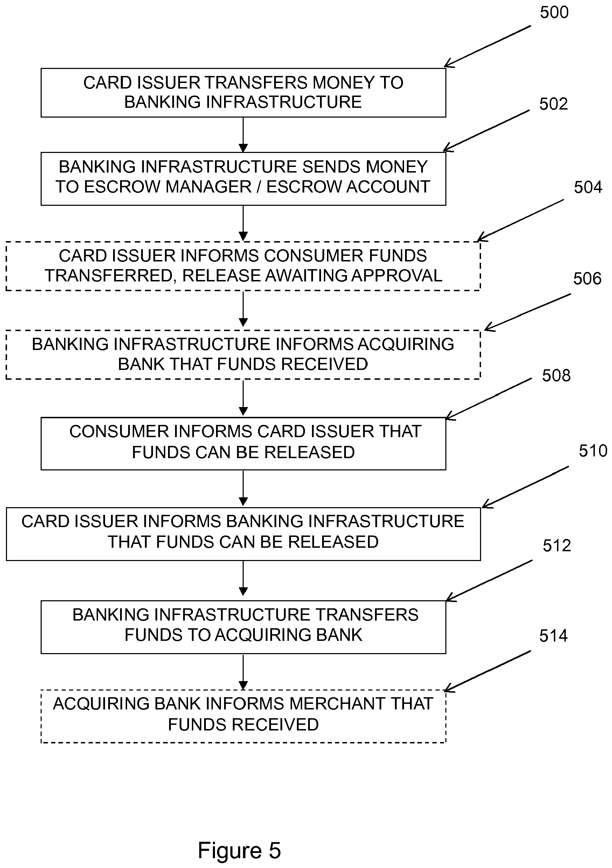

Figure 5 shows in flow diagram form a method of clearing and settling a transaction according to embodiments of the invention. In particular, Figure 5 shows an embodiment wherein approval from the customer is required in order for the settlement to be completed. For example, a customer may be able to approve the transfer of funds when the goods have been received by the consumer or the services have been performed. As shown on Figure 5, after a transaction has been authorised, a first settlement step is performed, whereby the issuing bank 12 transfers 500 the money to the banking infrastructure 14. The banking infrastructure 14 then sends 502 the money to the escrow manager 16. In embodiments, the escrow manager 16 is part of the banking infrastructure, such that at step 502 the banking infrastructure 14 moves the money to an escrow account of the banking infrastructure 14.

Optionally, the issuing bank 12 may send 504 a message to the consumer, informing them that the funds have been transferred. This message may additionally inform the consumer that the funds will be held in escrow until approval is received. Further, the message may contain information allowing the consumer to approve the transaction, such as e.g. a link, phone number or address to contact, and a transaction identifier. In embodiments, the transaction identifier may comprise the transaction identifier comprised in the escrow flag. In embodiments, the transaction identifier may be generated by the issuing bank 12 or the escrow manager 16, and reconciled with the transaction identifier comprised in the escrow flag. In embodiments, the transaction identifier may comprise information associated with the consumer (e.g. a personal account number, PAN) and the transaction (e.g. a transaction reference such as a transaction identifier comprised in the escrow flag or a transaction identifier generated by the issuing bank 12 or the escrow manager 16).

In embodiments, the issuing bank 12 may send one or more reminder messages to the consumer. For example, the issuing bank 12 may send one or more reminder messages if approval has not been obtained within a specified period of time.

Optionally, the banking infrastructure may send 506 a message to the acquiring bank 8 to inform them that the funds have been received by the escrow manager 16. The acquiring bank 8 may then optionally inform 508 the merchant that the funds have been transferred from the issuing bank 12.

At step 508, the consumer informs the issuing bank 12 that the funds can be released. In embodiments, the consumer may call or otherwise contact the issuing bank 12 in order to release the funds, using a transaction identifier obtained from the message sent at step 504 or from a transaction receipt. In embodiments, the issuing bank 12 may provide a mobile or web based application enabling a user to view and manage pending escrow transactions. The approval from the consumer may be verified using any authentication method known in the art. In particular, the identity of the account holder (customer) may be verified using any cardholder verification method known in the art.

The issuing bank 12 then informs 510 the banking infrastructure 14 or the escrow manager 16 that the funds can be released. Optionally, the escrow manager 16 (or the banking infrastructure 14 if it performs the functions of the escrow manager 16) may verify that the conditions for release of funds have been satisfied. For example, the escrow manager may verify that the amount received matches the amount of the transaction, that all necessary approvals have been obtained, etc. The banking infrastructure 14 then transfers 512 the funds from the escrow manager 16 to the acquiring bank 8. This completes the second settlement step. Optionally, the acquiring bank may then inform 514 the merchant that the funds have been received.

In embodiments, the escrow manager 16 may automatically send the funds back to the issuing bank 12 (directly or via the banking infrastructure 14), if approval has not been obtained within a specified period of time. In embodiments, the issuing bank 12 may request a refund from the escrow manager 16 or the banking infrastructure 14 if approval has not been obtained within a specified period of time. In embodiments, the escrow manager 16 may verify that the approval conditions have not been fulfilled before returning the funds. In embodiments, the issuing bank 12 may inform the consumer that the funds have been returned. The banking infrastructure 14 may optionally send a message to the acquiring bank 8 to inform the merchant that the funds have been returned to the issuing bank 12.

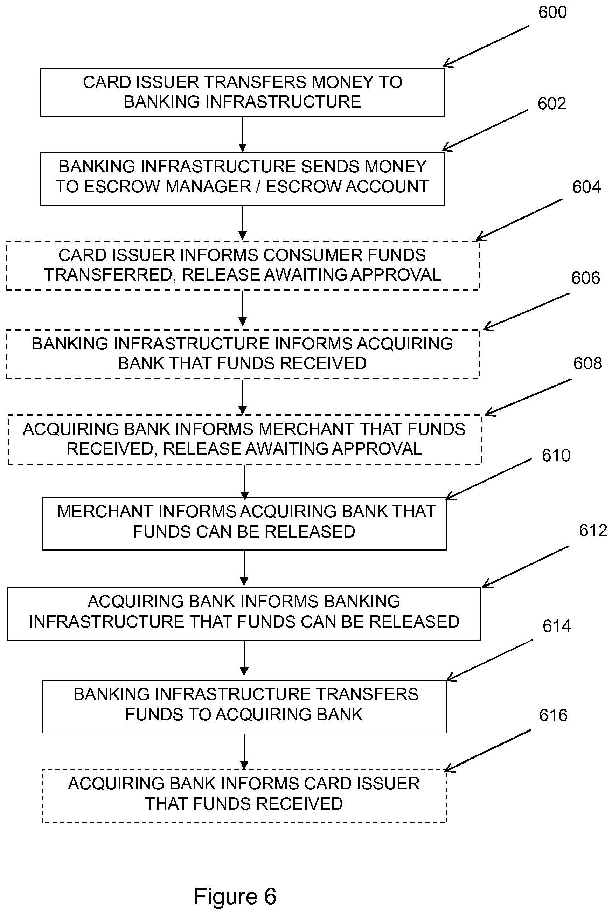

Figure 6 shows in flow diagram form a method of clearing and settling a transaction according to embodiments of the invention. In particular, Figure 6 shows an embodiment wherein approval from the merchant is required in order for the settlement to be completed. For example, a merchant may be able to provide the goods and/or services to the consumer only when the merchant has confidence that the goods or services will be paid for, and approve the transfer of funds once the goods and/or services have been provided. As shown on Figure 6, after a transaction has been authorised, a first settlement step is performed, whereby the issuing bank 12 transfers 600 the money to the banking infrastructure 14. The banking infrastructure 14 then sends 602 the money to the escrow manager 16. In embodiments, the escrow manager 16 is part of the banking infrastructure, such that at step 602 the banking infrastructure 14 moves the money to an escrow account of the banking infrastructure 14.

Optionally, the issuing bank 12 may send 604 a message to the consumer, informing them that the funds have been transferred. This message may additionally inform the consumer that the funds will be held in escrow until approval is received.

Optionally, the banking infrastructure may send 606 a message to the acquiring bank 8 to inform them that the funds have been received by the escrow manager 16. The acquiring bank 8 may then optionally inform 608 the merchant that the funds have been transferred from the issuing bank 12. This message may additionally inform the merchant that the funds will be held in escrow until approval is received. Further, the message may contain information allowing the merchant to approve the transaction, such as e.g. a link, phone number or address to contact, and a transaction identifier. In embodiments, the transaction identifier may comprise the transaction identifier comprised in the escrow flag. In embodiments, the transaction identifier may be generated by the acquiring bank 8 or the escrow manager 16, and reconciled with the transaction identifier comprised in the escrow flag. In embodiments, the transaction identifier may comprise information associated with the consumer (e.g. a personal account number, PAN) and the transaction (e.g. a transaction reference such as a transaction identifier comprised in the escrow flag or a transaction identifier generated by the acquiring bank 8 or the escrow manager 16).

In embodiments, the acquiring bank 8 may send one or more reminder messages to the merchant. For example, the acquiring bank 8 may send one or more reminder messages if approval has not been obtained within a specified period of time. In embodiments, the issuing bank 12 may send one or more reminder messages to the consumer. For example, the issuing bank 12 may send one or more reminder messages if approval has not been obtained within a specified period of time.

At step 610, the merchant informs the acquiring bank 8 that the funds can be released. The approval from the merchant may be verified using any authentication method known in the art. In particular, the identity of the account holder (merchant) may be verified using any cardholder verification method known in the art. The acquiring bank 8 then informs 612 the banking infrastructure 14 that the funds can be released. Optionally, the escrow manager 16 (or the banking infrastructure 14 if it performs the functions of the escrow manager 16) may verify that the conditions for release of funds have been satisfied. For example, the escrow manager may verify that the amount received matches the amount of the transaction, that all necessary approvals have been obtained, etc. The banking infrastructure 14 then transfers 614 the funds from the escrow manager 16 to the acquiring bank 8. This completes the second settlement step. Optionally, the banking infrastructure may then inform 616 the issuing bank 12 that the funds have been transferred to the acquiring bank 8.

In embodiments, the escrow manager 16 may automatically send the funds back to the issuing bank 12 (directly or via the banking infrastructure 14), if approval has not been obtained within a specified period of time. In embodiments, the issuing bank 12 may request a refund from the escrow manager 16 or the banking infrastructure 14 if approval has not been obtained within a specified period of time. In embodiments, the escrow manager 16 may verify that the approval conditions have not been fulfilled before returning the funds. In embodiments, the issuing bank 12 may inform the consumer that the funds have been returned. The banking infrastructure 14 may optionally send a message to the acquiring bank 8 to inform the merchant that the funds have been returned to the issuing bank 12.

In embodiments, approval from the merchant and the customer may be necessary for the funds to be transferred. In embodiment, the banking infrastructure 14 transfers the funds from the escrow manager 16 to the acquiring bank 8 after receiving confirmation from both the acquiring bank (step 612) and the issuing bank 12 (step 510) that the funds can be released. Prior to transferring the funds, the escrow manager 16 (or the banking infrastructure 14 if it performs the functions of the escrow manager 16) may verify that the conditions for release of funds have been satisfied. In embodiments, the escrow manager 16 may automatically send the funds back to the card issuer 12 (directly or via the banking infrastructure 14), if approval from either the card issuer 12 or the acquiring bank 8 has not been obtained within a specified period of time. In embodiments, the card issuer 12 may request a refund from the escrow manager 16 or the banking infrastructure 14 if approval from the customer has not been obtained within a specified period of time. In embodiments, the acquiring bank 8 may inform the banking infrastructure 14 that the funds should be refunded to the card issuer 12 if approval from the merchant has not been obtained within a specified period of time. In embodiments, the escrow manager 16 may verify that the approval conditions have not been fulfilled before returning the funds. In embodiments, the card issuer 12 may inform the consumer that the funds have been returned. The banking infrastructure 14 may optionally send a message to the acquiring bank 8 to inform the merchant that the funds have been returned to the card issuer 12.

As the person skilled in the art will appreciate, modifications and variations to the above embodiments may be provided, and further embodiments may be developed, without departing from the spirit and scope of the disclosure. Reference to standards and proprietary technologies are provided for the purpose of describing effective implementations, and do not limit the scope of the disclosure.

## Claims

1. A method for performing a transaction via a banking infrastructure, between a consumer using a transaction device associated with an issuing bank and a merchant using a merchant terminal configured to communicate with an acquiring bank, the method comprising:
an authorisation step wherein authorisation is obtained from the consumer's bank;
a first settlement step wherein funds for the transaction are received by the banking infrastructure from the consumer's bank;
an approval step wherein the banking infrastructure receives approval from the issuing bank and/or the acquiring bank for release of the funds; and
a second settlement step wherein the banking infrastructure transfers the funds to the acquiring bank.

2. The method of claim 1, wherein the authorisation step comprises receiving signed transaction details from the issuing bank, wherein the signed transaction details comprise an identifier that identifies the transaction as a two steps settlement transaction.

3. The method of any preceding claim, wherein the second settlement step comprising transferring the funds back to the issuing bank if approval has not been received within a specified period of time.

4. The method of any preceding claim, wherein the authorisation step comprises receiving signed transaction details from the acquiring bank, and extracting from the signed transaction detail one or more data fields comprising the approval conditions of the transaction.

5. The method of claim 4, wherein the one or more data fields comprising approval conditions comprise information regarding whether approval from the issuing bank and/or acquiring bank is/are necessary for release of the funds.

6. The method of any of claims 4 or 5, further comprising checking that the approval conditions have been fulfilled before performing the second settlement step.

7. The method of any of claims 1 to 6, wherein the authorisation is performed as an online transaction authorisation process according to EMV standards.

8. A terminal having a processor, a memory, means to make a connection with a transaction device, means to communicate with an acquiring bank, and a user interface, the terminal being programmed to:
request confirmation from a user, via the user interface, that a two steps settlement transaction according to the method of claims 1 to 7 is to be performed;
compute an escrow identifier, wherein the escrow identifier identifies the transaction as a two steps settlement transaction according to the method of claims 1 to 7;
send transaction details comprising the escrow identifier to the transaction device;
receive a signature of the transaction details from the transaction device;
send the signed transaction details to the acquiring bank; and
receive an authorisation message from the acquiring bank.

9. The terminal of claim 8, wherein the terminal being programmed to request confirmation from a user comprises the terminal being programmed to obtain an indication of the approval conditions of the transaction.

10. The terminal of claim 9, wherein the terminal being programmed to obtain an indication of the approval conditions of the transaction comprise the terminal being programme to request the user to indicate whether approval from the consumer and/or the merchant are required for the two steps settlement transaction to proceed to completion.

11. The terminal of any of claims 8 to 10, wherein the terminal being programmed to send the signed transaction details to the acquiring bank comprises the terminal identifying the transaction as a two steps settlement transaction by including the escrow identifier in the signed transaction details.

12. The terminal of any of claims 8 to 11, wherein the terminal being programmed to compute an escrow identifier comprises the terminal being programmed to compute an escrow identifier that identifies the transaction as a two steps settlement transaction according to the method of claims 1 to 7 and that identifies the approval conditions of the transaction.
